# DEMANDE DE BREVET EUROPEEN

(11) **EP 2 731 002 A1**
(43) Date de publication de la demande: **14.05.2014**
(21) Numéro de dépôt: 13189036.0
(22) Date de dépôt: 17.10.2013
(51) Int. Cl.: G06F 3/0488, G06F 3/0481

(54) **Procédé de sécurisation d'une commande sur un dispositif de visualisation à surface tactile et système associé**

(30) Priorité: 09.11.2012 FR 1203013
(71) Demandeur: Thales, 92200 Neuilly Sur Seine (FR)
(72) Inventeur: Becouarn, Loïc, 33187 Le Haillan (FR); Le Roux, Yannick, 33187 Le Haillan (FR); Hourlier, Sylvain, 33000 Bordeaux (FR); Alapetite, Alexandre, 2720 Vanlose (DK); Fogh, Rune, 2100 Copenhague 0 (DK); Andersen, Henning Boje, 4000 Roskilde (DK)
(74) Mandataire: Bréda, Jean-Marc

(57) **Abrégé**

Le domaine général de l'invention est celui des procédés assurant une commande sécurisée d'un équipement au moyen d'un dispositif de visualisation comportant une surface tactile apte à détecter plusieurs touchers simultanés. Le procédé selon l'invention comprend :
- Une première étape d'affichage sur le dispositif de visualisation d'un premier symbole (B, B_{ON}) représentant la commande dans un état verrouillé ;
- Une seconde étape d'affichage, après un premier toucher sur la surface tactile, d'un second symbole (S, B_{OFF}, CC, P, A) représentant un geste de « déverrouillage » ;
- Une troisième étape de réalisation dudit geste de « déverrouillage » ;
- Une quatrième étape de validation de la commande par deux touchers simultanés aux emplacements des premier et second symboles ;
- Une cinquième étape de changement d'apparence du premier symbole représentant la commande à activer dans un état déverrouillé et activé.

## Description

Le domaine de l'invention est celui des interfaces homme-machine appelées « IHM » et qui requièrent la validation d'une action critique. Dans certains contextes techniques ou industriels, la mise en oeuvre de systèmes peut avoir des conséquences graves et ne doit être effectuée qu'en pleine connaissance de cause par l'utilisateur. On citera, à titre d'exemples, les domaines aéronautiques ou nucléaires.

Dans les cockpits d'aéronefs civils ou militaires, les planches de bord comportent différents moyens d'interaction avec les systèmes principaux de l'aéronef qui sont l'avionique de bord, les moteurs, le système d'arme....

Lorsque l'action ou la tâche a un haut niveau de criticité, ces moyens d'interaction doivent permettre d'éviter toute commande involontaire du pilote ou de l'équipage. Pour ce faire, les aéronefs sont équipés de contacteurs sous cache appelés « boutons gardés » ou en terminologie anglo-saxonne « Guarded Switch ». Pour réaliser l'action, l'utilisateur doit préalablement lever un capot mécanique de protection pour avoir accès au bouton de commande. Le capot est muni d'un système à ressort qui le maintient en position de sécurité au-dessus du bouton de commande si l'utilisateur le relâche.

L'évolution actuelle des interfaces homme-machine consiste à remplacer progressivement les dispositifs mécaniques ou électromécaniques de commande par des commandes assurées par des interfaces tactiles disposées sur des écrans de visualisation. Ainsi, les boutons de commande deviennent virtuels. Ce type de solution technique a de nombreux avantages. Il est plus simple à mettre en oeuvre et permet un gain de place important par rapport aux anciens systèmes. Il est beaucoup plus facilement reconfigurable et susceptible d'évolutions selon les besoins de l'avionneur. Il permet également l'accès à de nouvelles fonctions comme les animations graphiques.

Bien entendu, la sécurité assurée par un bouton de garde virtuel commandé par une surface tactile doit, au moins, être identique à celle des boutons de garde à capot mécanique. Pour résoudre ce problème, plusieurs solutions techniques ont été proposées.

Une première solution décrite dans le brevet français FR 2 911409 intitulé « Procédés et système assurant une commande sécurisée à partir d'un écran tactile » présente un procédé d'affichage d'un bouton sécurisé comprenant une représentation graphique d'un bouton gardé. La commande du bouton est assurée par une première étape de déverrouillage et une seconde étape de commande, la représentation graphique étant modifiée à chaque étape. Dans une variante, le brevet US 7 788 604 intitulé « Three state icons for operations » présente une icône comportant trois états, un état verrouillé, un état déverrouillé et un état de commande.

Une seconde solution est décrite dans le brevet français FR 2 853 095 intitulé « Dispositif d'interface homme machine sécurisé pour écran tactile ». Cette solution décrit également une représentation d'un bouton gardé commandé par une surface tactile. Dans cette solution, l'opérateur doit réaliser un mouvement d'une forme géométrique particulière pour déverrouiller le bouton gardé.

Une troisième solution permettant de valider qu'une action de l'utilisateur n'est pas fortuite ou due à des causes extérieures est décrite dans le brevet US 5 801 682 intitulé « Tactile designation device with high-resolution transparent capacitive surface » consiste à réaliser deux modes de détection différents d'un appui tactile, le premier de type capacitif, le second à jauges de contrainte, la détection d'une action par un premier mode détection devant être confirmée par le second mode pour valider l'action.

Une quatrième solution consiste à valider une action à condition qu'elle réponde à un mouvement de forme prédéfinie. Dans cette catégorie, on citera le brevet US 5 252 951 intitulé « Graphical user interface with gesture recognition in a multiapplication environment », la demande de brevet US 2010/0162182 intitulée « Method and apparatus for unlocking electronic appliance » et la demande de brevet EP 2009/062682 intitulée « Method for application lauch and system function invocation ». Cette dernière solution est généralement dédiée aux applications de téléphonie mobile.

Une cinquième solution qui est une variante des précédentes consiste à indiquer graphiquement à l'utilisateur le geste à accomplir pour déverrouiller une fonction particulière. On citera, dans cette catégorie, le brevet US 7 657 849 intitulé « Unlocking a device byperforming gestures on an unlock image », la demande de brevet US 2010/0248689 intitulée « Unlock screen » qui décrit une animation particulière permettant de passer d'une page graphique à la suivante. Enfin, le brevet US 7 593 000 décrit un procédé permettant de mémoriser un geste particulier pour authentification. Dans le domaine voisin de l'automobile, la détection de mouvement est également utilisée pour réaliser des commandes. On se référera, en particulier, aux demandes de brevet US 2011/0050589 intitulée « Gesture-based information and command entry for motor vehicle » et WO 2011/083212 intitulée « Control device for a motor vehicle ».

Le procédé selon l'invention assure également une commande sécurisée à partir d'un écran tactile. De façon à assurer à la fois une sécurité optimale et un mode de fonctionnement facilement compréhensible par l'utilisateur, il combine plusieurs principes qui sont les suivants :
- Plusieurs étapes différentiées sont nécessaires pour déverrouiller un bouton de commande ;
- Mise en place d'un symbole particulier indiquant à l'utilisateur le geste à effectuer ;
- Utilisation d'au moins deux doigts de l'utilisateur pour mettre en oeuvre le procédé de façon à le sécuriser.

Plus précisément, l'invention a pour objet un procédé d'affichage et d'activation assurant une commande sécurisée d'un équipement mis en oeuvre par un système électronique comprenant au moins des moyens de génération de symboles graphiques, un dispositif de visualisation et une surface tactile associée audit dispositif de visualisation et agencée de façon à détecter plusieurs touchers simultanés, **caractérisé en ce que** le procédé d'affichage et d'activation comprend :
- Une première étape d'affichage sur le dispositif de visualisation d'un premier symbole représentant la commande à activer dans un état verrouillé ;
- Une seconde étape d'affichage, après un premier toucher sur la surface tactile, d'au moins un second symbole représentatif d'un geste à effectuer dit de « déverrouillage » pour obtenir le déverrouillage de ladite commande ;
- Une troisième étape de réalisation dudit geste de « déverrouillage » ;
- Une quatrième étape de validation de la commande par au moins deux touchers simultanés, le premier à l'emplacement du premier symbole et le second à l'emplacement du second symbole ;
- Une cinquième étape de changement d'apparence du premier symbole représentant la commande à activer dans un état déverrouillé et activé.

Avantageusement, le premier symbole représente un bouton de commande dans un premier état ou un curseur rectiligne.

Avantageusement, le second symbole affiché dans la seconde étape représente une forme géométrique simple et colorée ou un bouton de commande dans un second état ou le tracé du geste à accomplir.

Avantageusement, le geste à accomplir dans la troisième étape est un appui simple et fixe ou un mouvement rectiligne ou un mouvement semi-circulaire.

Avantageusement, la quatrième étape de validation de la commande n'est effective qu'après un temps de touchers simultanés prédéterminé.

Avantageusement, pendant la quatrième étape de validation de la commande, un indicateur du temps écoulé s'affiche, la longueur de l'indicateur correspondant au temps de touchers simultanés prédéterminé.

Avantageusement, la quatrième étape de validation de la commande n'est effective qu'après trois touchers simultanés.

L'invention concerne également un système électronique pour aéronef comprenant au moins des moyens de génération de symboles graphiques, un dispositif de visualisation et une surface tactile associée audit dispositif de visualisation et agencée de façon à détecter plusieurs touchers simultanés, **caractérisé en ce qu'**une commande sécurisée d'un équipement aéronautique est activée par le procédé d'affichage et d'activation décrit plus haut.

L'invention sera mieux comprise et d'autres avantages apparaîtront à la lecture de la description qui va suivre donnée à titre non limitatif et grâce aux figures annexées parmi lesquelles :
La figure 1 représente quatre étapes principales d'un premier mode de réalisation du procédé selon l'invention ;
La figure 2 représente quatre étapes principales d'un second mode de réalisation du procédé selon l'invention ;
La figure 3 représente quatre étapes principales d'un troisième mode de réalisation du procédé selon l'invention ;
La figure 4 représente quatre étapes principales d'un quatrième mode de réalisation du procédé selon l'invention.

La mise en oeuvre du procédé d'affichage et d'activation assurant une commande sécurisée selon l'invention nécessite des moyens de génération de symboles graphiques, un dispositif de visualisation et une surface tactile associée au dispositif de visualisation et agencée de façon à détecter plusieurs touchers simultanés encore appelée « Multi-touch ». Ces moyens techniques sont facilement accessibles à l'homme du métier.

La mise en oeuvre du procédé passe par la programmation d'un logiciel configuré pour réaliser les différentes étapes du procédé. Elle ne présente pas de difficultés particulières pour l'homme du métier. Comme il a été dit, le procédé d'affichage et d'activation comprend cinq étapes qui sont :
- Une première étape d'affichage sur le dispositif de visualisation d'un premier symbole représentant la commande à activer dans un état verrouillé ;
- Une seconde étape d'affichage, après un premier toucher sur la surface tactile, d'au moins un second symbole représentatif d'un geste à effectuer dit de « déverrouillage » pour obtenir le déverrouillage de ladite commande ;

Une troisième étape de réalisation dudit geste de « déverrouillage » ;

Une quatrième étape de validation de la commande par au moins deux touchers simultanés, le premier à l'emplacement du premier symbole et le second à l'emplacement du second symbole ;
- Une cinquième étape de changement d'apparence du premier symbole représentant la commande à activer dans un état déverrouillée et activé.

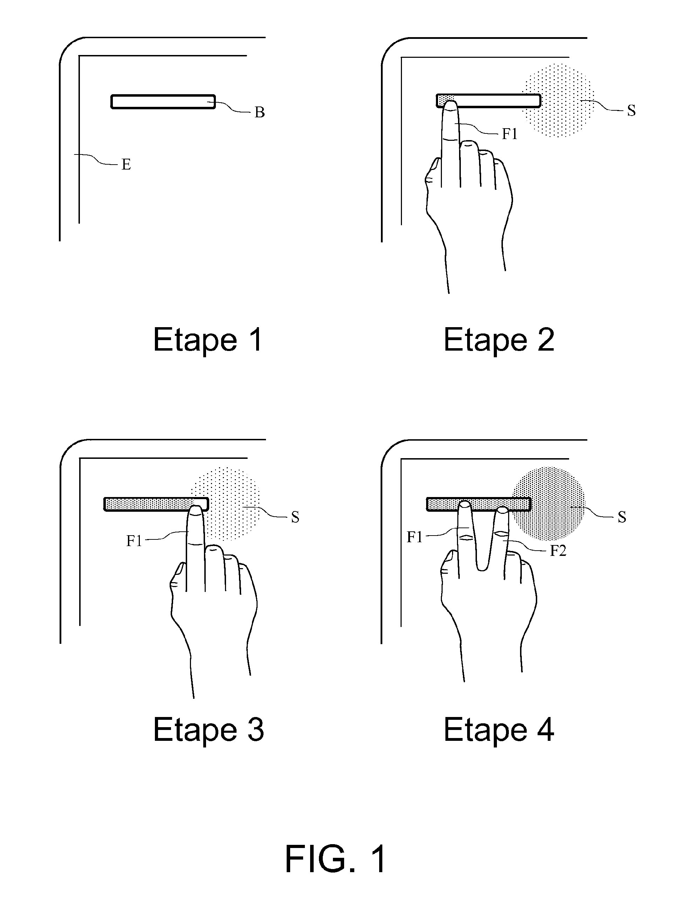

A titre d'exemples, les figures 1 à 4 représentent quatre mises en oeuvre possibles du procédé selon l'invention. Chaque figure comporte quatre dessins représentant chacun les étapes principales du procédé selon l'invention. Sur ces figures, seul un bord d'écran E a été représenté comportant uniquement les symboles graphiques nécessaires à la réalisation des différentes étapes du procédé. Les boutons de commande à activer sont représentés avec un contour gras.

Une première variante représentée en figure 1 représente le déverrouillage d'un bouton de commande B en forme de curseur. Dans une première étape, le curseur B est affiché sur l'écran de visualisation E. Dans une seconde étape, un doigt F1 de l'utilisateur touche une des extrémités du curseur. Un cercle coloré ou semi-transparent S apparaît indiquant à l'utilisateur de parcourir linéairement le curseur B avec son doigt F1. Dans une troisième étape, le doigt F1 parcourt le curseur. Lorsqu'il arrive à l'extrémité du curseur, le symbole S change de couleur ou de transparence indiquant que le déverrouillage du curseur peut être effectué. Dans une quatrième étape, deux doigts F1 et F2 de l'utilisateur appuient simultanément sur le curseur B et le symbole S entraînant le déverrouillage de la commande.

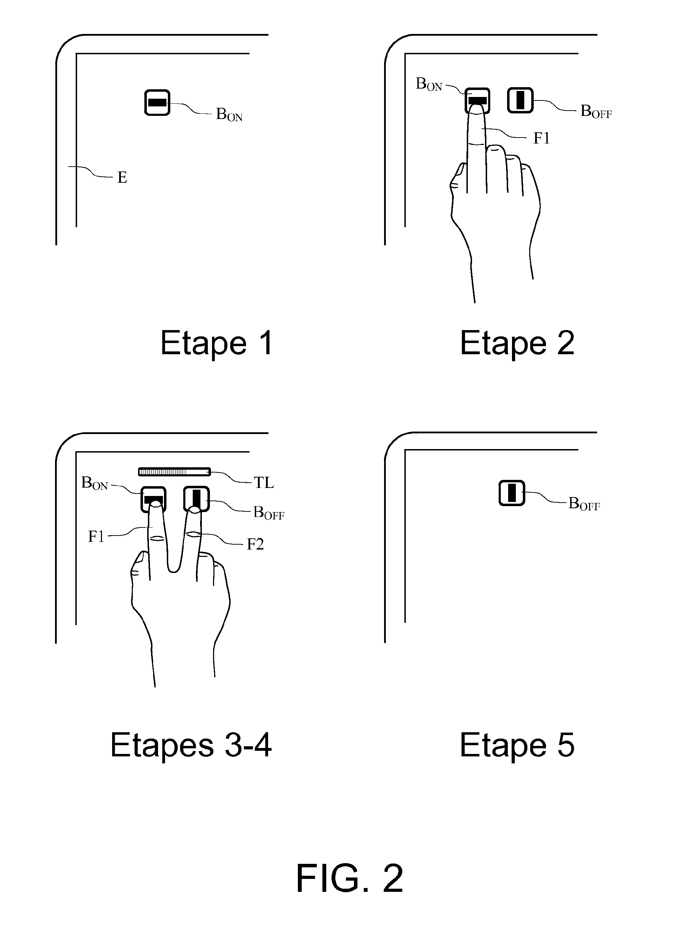

Une seconde variante représentée en figure 2 représente le changement d'état d'une commande passant d'un état passant à un état bloquant. Dans une première étape, l'état passant est représenté par un bouton carré B_{ON} comportant une barre noire horizontale sur l'écran de visualisation E. Dans une seconde étape, un doigt F1 de l'utilisateur touche ce bouton. Un bouton carré B_{OFF} comportant une barre noire verticale sur l'écran de visualisation E apparaît. Dans une troisième étape, l'utilisateur appuie deux doigts F1 et F2 sur les boutons B_{ON} et B_{OFF}. Un indicateur du temps TL écoulé s'affiche, la longueur de l'indicateur correspondant à un temps de touchers simultanés prédéterminé qui peut être de quelques centaines de millisecondes. Dans une quatrième étape, le temps prédéterminé est écoulé entraînant le déverrouillage de la commande. Dans une cinquième étape, seul le bouton carré B_{OFF} est affiché.

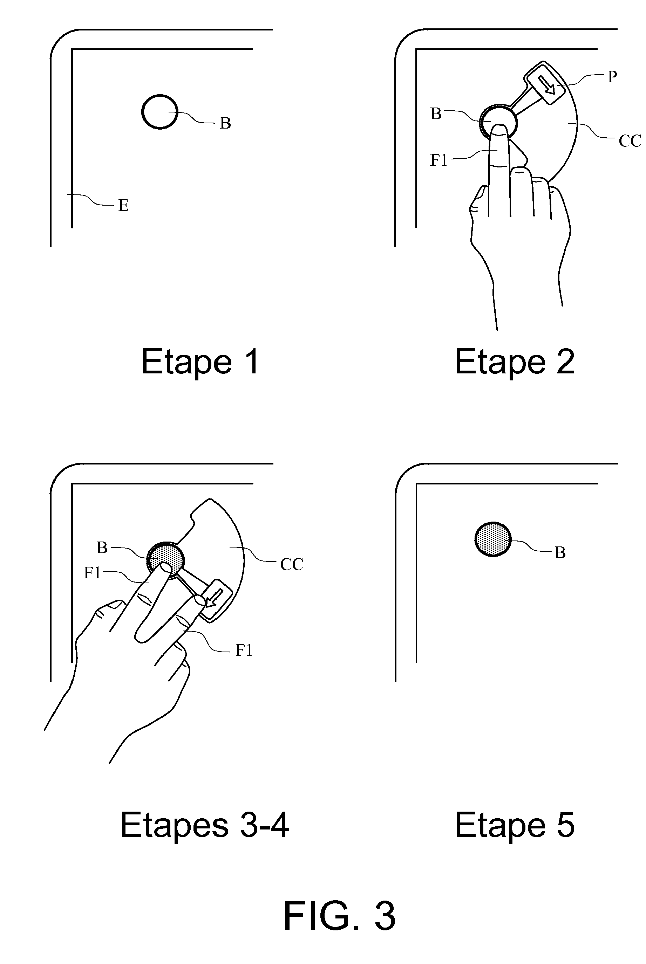

Une troisième variante représentée en figure 3 représente le déverrouillage d'un bouton de commande circulaire B. Dans une première étape, le bouton B est affiché sur l'écran de visualisation E. Dans une seconde étape, un doigt F1 de l'utilisateur touche le bouton B. Un quart de cercle coloré ou semi-transparent CC apparaît. Il comporte un pivot P axé sur le bouton B et comportant une flèche à son extrémité indiquant à l'utilisateur de tourner ce pivot P. Dans une troisième étape, l'utilisateur utilise deux doigts F1 et F2 pour tourner le pivot P, le premier doigt fixe centré sur le bouton et le second doigt mobile déplaçant le pivot. Dans une quatrième étape, le pivot arrive en fin de course entraînant le déverrouillage de la commande. Dans une cinquième étape, le bouton B change d'apparence indiquant que l'activation du bouton B est effective.

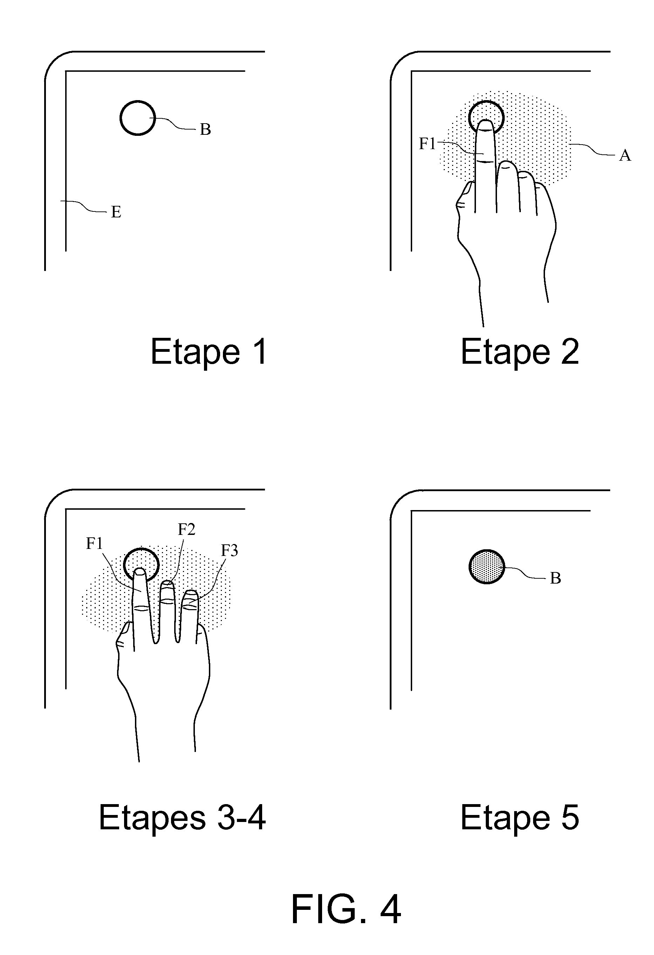

Une quatrième variante représentée en figure 4 représente également le déverrouillage d'un bouton de commande circulaire B. Dans une première étape, le bouton B est affiché sur l'écran de visualisation E. Dans une seconde étape, un doigt F1 de l'utilisateur touche le bouton B. Une plage colorée A apparaît autour du bouton B. Dans une troisième étape, l'utilisateur appuie avec trois doigts F1, F2 et F3 dans la plage A. Dans une quatrième étape, l'utilisateur maintient ses trois doigts appuyés pendant une durée prédéterminée qui peut être de quelques centaines de millisecondes validant le déverrouillage du bouton B. Dans une cinquième étape, le bouton B change d'apparence indiquant que l'activation du bouton B est effective.

## Revendications

1. Procédé d'affichage et d'activation assurant une commande sécurisée d'un équipement mis en oeuvre par un système électronique comprenant au moins des moyens de génération de symboles graphiques, un dispositif de visualisation (E) et une surface tactile associée audit dispositif de visualisation et agencée de façon à détecter plusieurs touchers simultanés, **caractérisé en ce que** le procédé d'affichage et d'activation comprend :
- Une première étape d'affichage sur le dispositif de visualisation d'un premier symbole (B, B_{ON}) représentant la commande à activer dans un état verrouillé ;
- Une seconde étape d'affichage, après un premier toucher sur la surface tactile, d'au moins un second symbole (S, B_{OFF}, CC, P, A) représentatif d'un geste à effectuer dit de « déverrouillage » pour obtenir le déverrouillage de ladite commande ;
- Une troisième étape de réalisation dudit geste de « déverrouillage » ;
- Une quatrième étape de validation de la commande par au moins deux touchers simultanés, le premier à l'emplacement du premier symbole et le second à l'emplacement du second symbole ;
- Une cinquième étape de changement d'apparence du premier symbole représentant la commande à activer dans un état déverrouillée et activé.

2. Procédé d'affichage et d'activation selon la revendication 1, **caractérisé en ce que** le premier symbole (B, B_{ON}) représente un bouton de commande dans un premier état ou un curseur rectiligne.

3. Procédé d'affichage et d'activation selon la revendication 1, **caractérisé en ce que** le second symbole affiché dans la seconde étape représente une forme géométrique simple et colorée (S, CC, P, A) ou un bouton de commande (B_{OFF}) dans un second état ou le tracé du geste à accomplir.

4. Procédé d'affichage et d'activation selon la revendication 1, **caractérisé en ce que** le geste à accomplir dans la troisième étape est un appui simple et fixe ou un mouvement rectiligne ou un mouvement semi-circulaire.

5. Procédé d'affichage et d'activation selon la revendication 1, **caractérisé en ce que** la quatrième étape de validation de la commande n'est effective qu'après un temps de touchers simultanés prédéterminé.

6. Procédé d'affichage et d'activation selon la revendication 5, **caractérisé en ce que**, pendant la quatrième étape de validation de la commande, un indicateur du temps (TL) écoulé s'affiche, la longueur de l'indicateur correspondant au temps de touchers simultanés prédéterminé.

7. Procédé d'affichage et d'activation selon la revendication 1, **caractérisé en ce que** la quatrième étape de validation de la commande n'est effective qu'après trois touchers simultanés.

8. Système électronique pour aéronef comprenant au moins des moyens de génération de symboles graphiques, un dispositif de visualisation et une surface tactile associée audit dispositif de visualisation et agencée de façon à détecter plusieurs touchers simultanés, **caractérisé en ce qu'**une commande sécurisée d'un équipement aéronautique est activée par le procédé d'affichage et d'activation selon l'une des revendications précédentes.
